# EUROPEAN PATENT SPECIFICATION

(11) **EP 1 169 816 B1**
(45) Date of publication and mention of the grant of the patent: **08.11.2006**
(21) Application number: 00919979.5
(22) Date of filing: 29.03.2000
(51) Int. Cl.: H04L 12/28, H04L 12/56, H04L 29/06, H04M 3/42, H04L 12/66, H04Q 3/00

(54) **METHODS AND SYSTEMS FOR PROVIDING DATABASE NODE ACCESS CONTROL FUNCTIONALITY IN A COMMUNICATIONS NETWORK ROUTING NODE**
VERFAHREN UND SYSTEME ZUR BEREITSTELLUNG DER FUNKTIONALITÄT EINER DATENBASISZUGRIFFSKONTROLLE IN EINEM ROUTINGKNOTEN EINES KOMMUNIKATIONSNETZES
PROCEDES ET SYSTEMES OFFRANT UNE FONCTIONNALITE DE CONTROLE D'ACCES DE NOEUD DE BASE DE DONNEES DANS L'ACHEMINEMENT D'UN RESEAU DE COMMUNICATIONS

(30) Priority: 05.04.1999 US 127889 P; 19.11.1999 US 443712
(43) Date of publication of application: 09.01.2002
(73) Proprietor: Tekelec, Calabasas, CA 91302 (US)
(72) Inventor: MILLER, Paul, Andrew, Raleigh, NC 27614 (US); BENEDYK, Robby, Darren, Raleigh, NC 27613 (US); RAVISHANKAR, Venkataramaiah, Apex, NC 27502 (US); MARSICO, Peter, Joseph, Carrboro, NC 27510 (US)
(74) Representative: Reinhard - Skuhra - Weise & Partner
(86) International application number: PCT/US2000/008614
(87) International publication number: WO 2000/060812

(56) References cited:
- US-A- 5 675 635
- US-A- 5 694 463
- US-A- 5 706 286
- US-A- 5 761 500
- US-A- 5 793 771
- US-A- 5 920 562
- US-A- 6 018 515
- US-A- 6 021 126
- MCGREW M.: "Transport SS7 Signalling Over IP" 1 November 1998 (1998-11-01) , INTERNET DRAFT , IETF XP002234862 section 1.0 - section 5.0 * figures 1,2 *

## Description

### Technical Field

The present invention relates to the routing of signaling messages in a communications network, and more particularly to methods and systems for routing signaling messages destined for database network elements.

### Background Art

In modern telephony networks, service control points (SCPs) serve as an interface to telephony related databases, such as: call management services databases (CMSDB); line information databases (LIDB); and business services databases (BSDB). These databases are used, at least in part, to facilitate a variety of advanced intelligent network (AIN) related services including: find me service; follow me service; computer security service; call pickup service; store locator service; call waiting service; call block service; calling name delivery service; three way calling service; and 800 number services.

With particular regard to find me service, this service allows calls to be forwarded to another location. The difference between this feature and current call forwarding functionality is the ability to screen unwanted calls from forwarding. Only authorized callers are forwarded to the new location. Similarly, follow me service allows a number to be forwarded on a time schedule. The subscriber determines the time forwarding is to take place when the feature is invoked. Destinations can include both wired and wireless telephones or handsets.

Computer security service allows subscribers to prevent unauthorized callers from accessing a computer or application services. Only callers with the authorized access code or calling from an authorized number can access the services. The SS7 network delivers the calling party number to the destination end office. This number is then checked in a database located with a service control point (SCP), and, if authorized, is allowed to connect with the application. With call pickup service, when a call is placed to a number and is unanswered, the called party can be paged via radio pager. The called party can then dial a code from any telephone at any location and immediately be connected with the waiting caller. With regard to paging type services, manufacturers of such personal communications services (PCS) devices have to date developed two-way pagers that connect a caller with the party being paged. The pager is a two-way transceiver capable of receiving calls (pages) and connecting the caller with the paged party.

Store locator service allows businesses to advertise one number, and have callers automatically transferred to the nearest location based on the caller's telephone number. This allows businesses to advertise nationwide for all locations without special ads that are region specific. The calling party number is matched in a routing database located at an SCP, and the SCP provides the end office with the routing instructions based on the calling party number. With call routing service, businesses can reroute calls during periods of excessively high call volumes or after business hours.

It will be further appreciated that such telephony service databases may also be employed to provide communication service subscribers the flexibility to easily port their service from one communication service provider to another (i.e., number portability or local number portability). The application of such SCP-type database services is not limited to the traditional wired public switched telephone network (PSTN), but is also widely implemented in the wireless telecommunications industry. Typical wireless network communication database applications include; home location registers (HLRs), visitor location registers (VLRs), authentication centers (AuCs), and equipment identification registers (EIRs). In general, SCPs are the network elements that include database systems for providing the services discussed above.

It will also be appreciated that with the continuing convergence of traditional data networks and traditional telecommunication networks, the number and variety of converged or inter-network service related database applications designed to service the needs of combined data-telecommunications subscribers (e.g., presence service databases) will increase dramatically in the future.

With particular regard to traditional SCP network database elements, those skilled in the art of telecommunication network services will appreciate that an SCP is typically comprised of both a front end computer processor system and a back end database system. That is, the SCP front end processor (FEP) system typically does not store or contain the bulk data or information, but instead is the interface to a mainframe or minicomputer system that holds the actual database. Typically, there is a one-to-one correspondence between each FEP and an associated back end computing platform. In a signaling system 7 (SS7) signaling network environment, communication between an SCP front end and other nodes in the SS7 network is accomplished via dedicated SS7 communication links, while communication between the SCP front end and mainframe database back end is typically affected via a TCP/IP connection (or X.25 in older legacy systems). However, it should be noted that even within the telecommunications industry it is not uncommon to hear the term SCP used to describe the combination of front-end processors and mainframe back end database systems.

From an accessibility standpoint, the SS7 network address component of an SCP front end is a point code (PC), while the address component of an application residing on the database back end is referred to as a subsystem number (SSN). A single SCP may contain multiple applications and databases, and as such, there may be multiple subsystem numbers associated with a single SCP point code. Consequently, each SCP must be assigned a unique SS7 network address PC, but may have multiple back end database subsystems provisioned under each unique SS7 network address PC.

Typically, the front end of an SCP located in an SS7 network can perform protocol conversion from SS7 to TCP/IP (or SS7 to X.25 in the case of legacy systems), or it may provide the capability of communicating with the associated back end database directly through the use of primitives. A primitive is an interface that provides access from one level of the protocol to another level. In the case of back end databases, each database is considered to be an application entity, and the protocol used to access and interface to each application entity is known as transaction capabilities application part or TCAP.

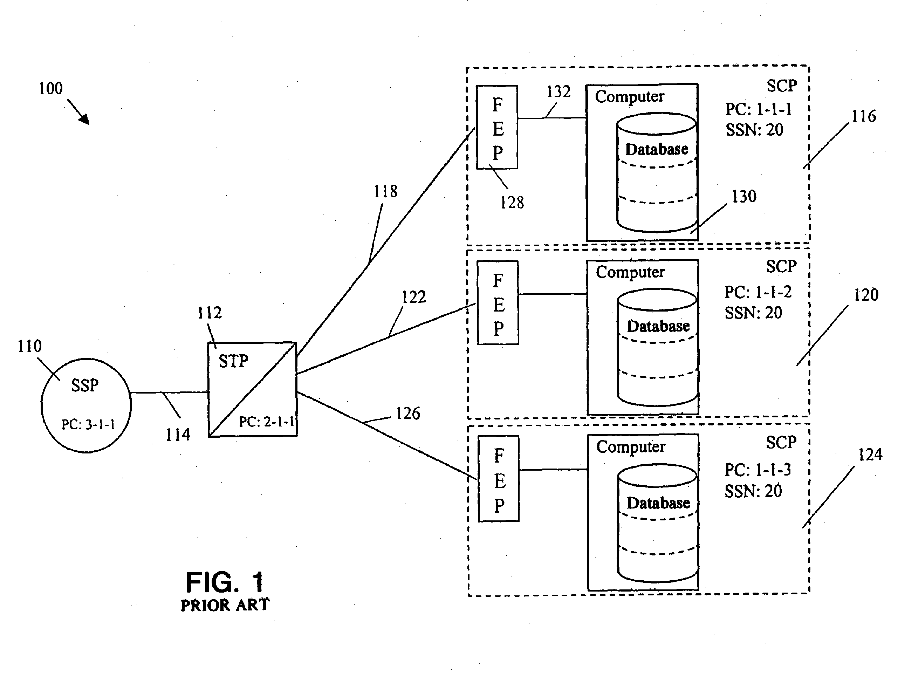

Shown in Figure 1 is an example of a prior art telecommunications network, generally indicated by the numeral **100**, that provides AIN-type functionality similar to that described above. Telecommunications network **100** includes an originating end office (EO) or service switching point (SSP) **110,** a signal transfer point (STP) **112,** a first SCP **116,** a second SCP **120,** and a third SCP **124.** It will be appreciated from Figure 1 that SSP **110** has a network address PC of 3-1-1, STP **112** has a PC of 2-1-1, SCP **116** has a PC of 1-1-1 and a SSN of 20, SCP **120** has a PC of 1-1-2 and a SSN of 20, and SCP **124** has a PC of 1-1-3 and SSN of 20. As further indicated in Figure 1, SSP **110** is coupled to STP **112** via a dedicated SS7 communication link **114,** which is in turn communicatively coupled to each of the three SCP nodes via dedicated SS7 communication links **118, 122,** and **126.** With regard to the SCP nodes **116, 120,** and **124,** it will be appreciated from Figure 1 that each overall SCP node is comprised of a number of components or sub-systems. More particularly, SCP **116** generally includes a front end processor (FEP) **128,** which is coupled to a back end database (BED) 130 via a communication link or bus **132.**

Given the above description of network **100,** it will be appreciated by one skilled in the art of telecommunication signaling operations that if, for instance, Calling Name (CNAM) service is requested by a subscriber that is serviced by SSP **110,** then SSP **110** will be required to formulate and send a CNAM query-type SS7 signaling message to STP **112** via the dedicated SS7 communication link **114.** If it is also assumed that a database application corresponding to SSN 20 of SCP **116** is provisioned to provide CNAM-type information, then CNAM query message will either be addressed directly to the PC & SSN of SCP **116** (i.e., PC: 1-1-1, SSN: 20), or the CNAM query message will be addressed so as to request a final destination address translation at the STP **112** (i,e., through global title translation). For purposes of illustration, it is assumed that global title translation service is not required and, consequently, that the CNAM query message is addressed directly to SCP **116** (i.e., PC: 1-1-1, SSN: 20). As such, the CNAM query message is received by STP **112** and subsequently routed over communication link **118** to FEP **128.** FEP **128** in turn receives the CNAM query message, processes the message, and facilitates access to the CNAM data stored in the BED **130.** Ultimately, a CNAM reply message addressed to SSP **110** (PC: 3-1-1) is formulated and transmitted back to STP **112,** which in turn routes the message to SSP **110.**

As described above, each complete SCP unit is equipped with a front end processor that is responsible for managing the unit's associated database resources. Such management functions include: protocol conversion, message parsing, administration of inbound queries and outbound responses, load sharing, etc. Each front end processor is integral with the SCP unit and consequently, there is a one-to-one relationship that exists between front end processors and SCP units. Front end processors are expensive, and what is needed is a way to reduce the overall cost of SCP units by allowing one front end processor to drive multiple SCP units.

US-A-5,694,463 describes a service control point SCP for use in a telecommunication network. SCP comprises multiple databases which allow routine plans to be stored and implemented. The SCP is operable to accept and answer queries from switches for routing information.

US-A-5, 706,286 describes a telecommunication system which provides validation of authorisation codes input by user for placing a call from a service area of a first telecommunication service provider with a calling card issued by another telecommunication service provider. If the protocol of one telecommunication service provider is indeed different from the other service provider, a gateway residing in an intelligent service network node convert the signalling protocol of the first provide into a signal protocol that is compatible with the other service provider.

"Transport SS7 Signalling Over IP" from the author M. McGrew, 1^{st} November 1998, Internet Draft IP XP-002234862, proposes the transport of SS7 signalling messages over IP in a way that utilises the existing SS7 network layers to ensure "carrier class" services as expected by existing users of SS7. The transport of SS7 user information could use TCP connections or UDP. The SS7 signalling messages would include ISUP or SCCP or, if the network services are not needed, could include only TCAP.

Therefore, what is needed is a system and method of incorporating SCP front end processing functionality within a communications network routing node such that multiple SCP back ends can be serviced by the single routing node. Furthermore, the SS7 signaling links typically employed to connect to SCP units are capital intensive and expensive to maintain. Consequently, a method of connecting to SCP units that does not require dedicated, expensive SS7 signaling links is also needed.

### Disclosure of the Invention

According to one aspect, the present invention includes a communications network element that is capable of generally routing messages and also performing load sharing, protocol conversion, and other services that have traditionally been provided by SCP front end processing (FEP) modules. The FEP routing node includes a communication module or modules capable of transmitting and receiving data packets over both SS7 and IP networks. A message discrimination process examines incoming data packets and subsequently directs certain packets to a database access control process that administers database lookup, protocol translation, and other FEP related processing services.

The functions for providing database access control are described herein as modules or processes. It is understood that these modules or processes may be implemented as computer-executable instructions embodied in a computer-readable medium. Alternatively, the modules or processes described herein may be implemented entirely in hardware. In yet another alternative embodiment, the modules or processes described herein may be implemented as a combination of hardware and software.

The processes and modules for providing database access control are described below as being associated with cards or subsystems within a routing node. It is understood that these cards or subsystems include hardware for storing and executing the processes and modules. For example, each card or subsystems described below may include one or more microprocessors, such as a Pentium^{®} processor available from Intel Corporation, and associated memory.

Accordingly, it is an object of the present invention to provide a routing node that offers centralized front end processing functionality to multiple SCP back ends.

It is yet another object of the present invention to provide a routing node that facilitates load sharing functionality among multiple SCP back ends.

It is yet another object of the present invention to provide a routing node that facilitates message protocol translation.

It is yet another object of the present invention to provide a method of eliminating the need for SS7 network point codes associated with SCP nodes.

It is yet another object of the present invention to provide a method of creating a virtual SCP that is comprised of multiple SCP back end databases, where the virtual SCP is assigned a single SS7 network point code.

It is yet another object of the present invention to provide a method of mapping multiple SCP nodes to a single SS7 network point code.

It is yet another object of the present invention to provide a method of allowing all messages requiring SCP service to be addressed to an SS7 point code that is the same as the SS7 point code of a router of the present invention.

It is yet another object of the present invention to provide a method of allowing messages to be routed based on the ownership of a database or SCP node.

Some of the objects of the invention having been stated hereinabove, other objects will become evident as the description proceeds, when taken in connection with the accompanying drawings as best described hereinbelow.

### Brief Description of the Drawings

Embodiments of the invention will now be described with reference to the accompanying drawings, of which:
Figure 1 is a network diagram illustrating a prior art telecommunications network that employs a signal transfer point (STP) node and multiple service control point (SCP) nodes;
Figure 2 is a schematic diagram of an STP switching node;
Figure 3 is a schematic and message flow diagram of a system architecture according to a preferred embodiment of a packet routing node of the present invention, generally indicating message flow associated with an incoming SCP query packet;
Figure 4 is a table that illustrates a sample database access control (DAC) database structure and data used in a preferred embodiment of a packet routing node of the present invention;
Figure 5 is a schematic diagram of a system architecture according to another embodiment of a packet routing node of the present invention, generally illustrating an externally mounted DAC process;
Figure 6 is a flow chart diagram illustrating integrated front end processor (FEP) processing of a SCP query message according to an embodiment of a packet routing node of the present invention;
Figure 7 is a schematic and message flow diagram of a system architecture according to a preferred embodiment of a packet routing node of the present invention, generally indicating message flow associated with an incoming network status packet;
Figure 8 is a network diagram illustrating an embodiment of the present invention that includes a packet routing node with FEP functionality and multiple SCP nodes;
Figure 9 is a network diagram illustrating another embodiment of the present invention where multiple SCP nodes each are assigned the same network address point code;
Figure 10 is a network diagram illustrating another embodiment of the present invention where multiple virtual service control point (vSCP) nodes each are assigned the same network address point code; and
Figure 11 is a network diagram illustrating another embodiment of the present invention where multiple vSCP nodes each are assigned the same network address point code as a packet router node.

### Detailed Description of the Invention

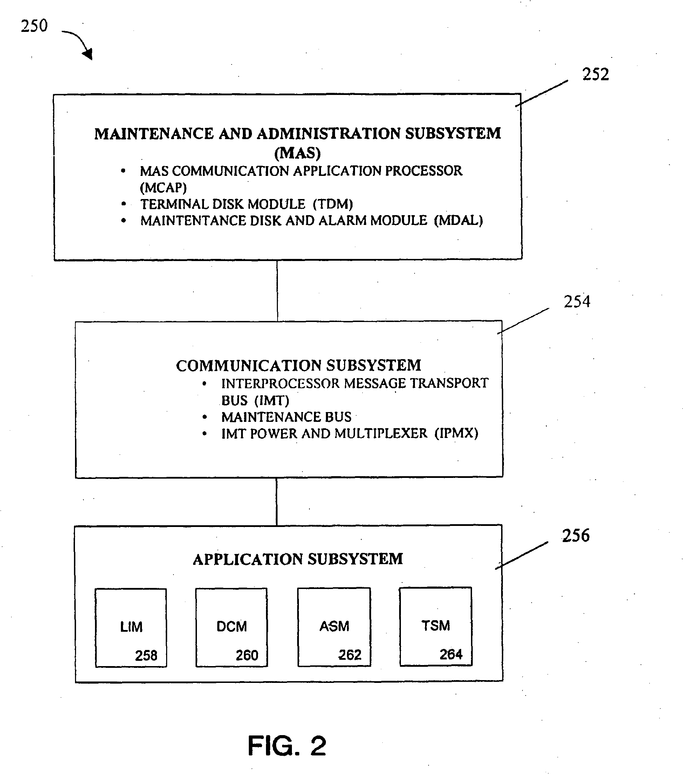

Disclosed herein are several embodiments of the present invention, all of which include a network element that performs functions similar to that of a traditional telecommunications network packet routing switch, such as a signal transfer point (STP). Each of the embodiments described and discussed below, employs an internal architecture similar to that of high performance STP and signaling gateway (SG) products which are marketed by Tekelec, Inc. of Calabasas, California as the Eagle^{®} STP and IP⁷ Secure Gateway^{tm}, respectively. A block diagram that generally illustrates the base internal architecture of the IP⁷ Secure Gateway^{tm} product is shown in Figure 2. A detailed description of the Eagle^{®} STP may be found in the *Eagle*^{*®*} *Feature Guide* PN/910-1225-01, Rev. B, January 1998, published by Tekelec, the disclosure of which is incorporated herein by reference in its entirety. Similarly, a detailed description of the IP⁷ Secure Gateway^{tm} may be found in Tekelec publication PN/909-0767-01, Rev B, August 1999, titled *Feature Notice IP*^{*7*} *Secure Gateway*^{tm} *Release 1.0,* the disclosure of which is incorporated by reference in its entirety. The specific functional components of an IP⁷ Secure Gateway^{tm} for transmitting and receiving TCAP messages over an Internet protocol (IP) network are described in above-referenced, co-pending U.S. Patent Application Serial No. 09/205,809. As described in the above referenced *Eagle*^{*®*} *Feature Guide,* an Eagle^{®} STP **250** includes the following subsystems: a maintenance and administration subsystem (MAS) **252,** a communication subsystem **254** and an application subsystem **256.** The MAS **252** provides maintenance communications, program load, user interface, alarm processing and system disks. The communication subsystem **254** includes an interprocessor message transport (IMT) bus that is the main communication bus among all subsystems in the **Eagle**^{**®**} STP **250.** This high-speed communications system functions as two 125 Mbps counter-rotating serial buses.

The application subsystem **256** includes application cards that are capable of communicating with the other cards through the IMT buses. Numerous types of application cards can be incorporated into STP **250,** including but not limited to: al link interface module (LIM) **258** that provides SS7 links and X.25 links, a database communication module (DCM) **260** that provides an IP interface using transmission control protocol (TCP), and an application service module (ASM) **262** that provides global title translation, gateway screening and other services. A translation service module (TSM) **264** may also be provided to support triggered local number portability service. Once again, a detailed description of the Eagle^{®} STP is provided in the above-cited *Eagle*^{*®*} *Feature Guide* and need not be described in detail herein. It should also be appreciated that, in addition to conventional SS7 LIM cards, a database communication module (DCM) can be employed in a similar manner to provide for the transport of IP encapsulated SS7 messages over an IP network, as described in the above referenced *Feature Notice IP*^{*7*} *Secure Gateway*^{tm} *Release 1.0* publication. With particular regard to the TSM triggered LNP services module mentioned above, a detailed description of the Tekelec triggered LNP solution may be found in the *Feature Guide LNP LSMS* PN/910-1598-01, Rev. A, January 1998, published by Tekelec, the disclosure of which is incorporated herein by reference in its entirety. Furthermore, systems and methods for providing triggerless LNP functionality within a network routing node are described in commonly-assigned, co-pending U.S. Patent Application Serial No. 09/503,541, the disclosure of which is incorporated herein by reference in its entirety.

### Integrated DAC Database Embodiment

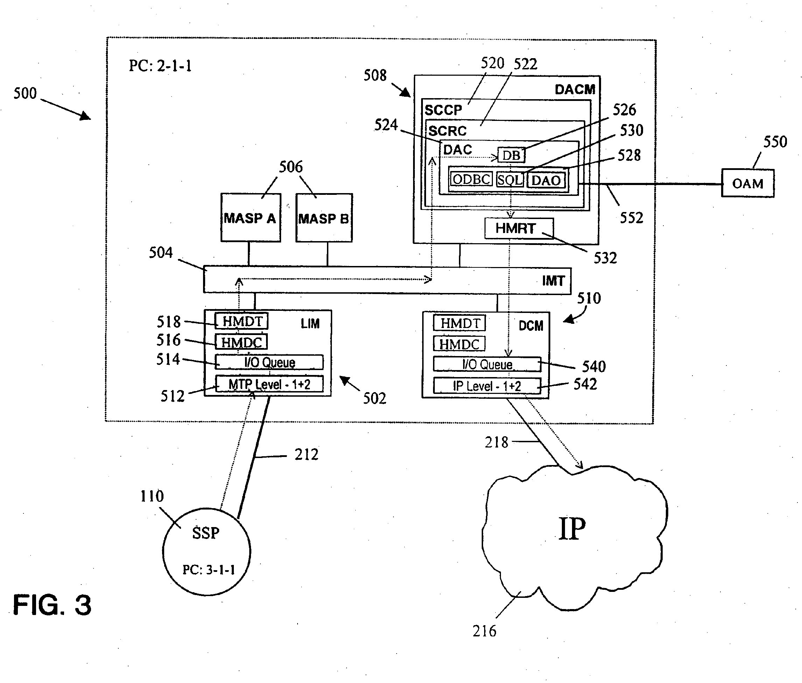

Shown in Figure 3 is a front end processing (FEP) packet routing node of the present invention that is generally indicated by the numeral **500.** It will be appreciated that FEP routing node **500** is communicatively coupled to an EO or SSP **110** via an SS7 signaling link **212,** and to an IP data network **216** via an IP connection **218.** As further illustrated in figure 3, FEP packet routing node **500** includes a high speed interprocessor message transport (IMT) communications bus **504.** Communicatively coupled to IMT bus **504** are a number of distributed processing modules or cards including: a pair of maintenance and administration subsystem processors (MASPs) **506;** an SS7 capable link interface module (LIM) **502;** an IP capable database communication module (DCM) **510;** and a database access control module (DACM) **508.** These modules are physically connected to the IMT bus **504** such that signaling and other type messages may be routed internally between all active cards or modules. For simplicity of illustration, only a single LIM **502,** DCM **510** and DACM **508** are included in Figure 3. However, it should be appreciated that the distributed, multi-processor architecture of the FEP routing node **500** facilitates the deployment of multiple LIM, DCM, DACM and other cards, all of which could be simultaneously connected to and communicating via IMT bus **504.**

MASP pair **506** implement the maintenance and administration subsystem functions described above. As the MASP pair **506** are not particularly relevant to a discussion of the flexible routing attributes of the present invention, a detailed discussion of their function is not provided herein. For a comprehensive discussion of additional MASP operations and functionality, the above-referenced Tekelec publications can be consulted.

Focusing now on LIM card functionality, it will be appreciated that LIM **502** is comprised of a number of sub-component processes including, but not limited to; SS7 MTP level 1 and 2 processes **512,** an I/O buffer or queue **514,** an SS7 MTP level 3 HMDC process **516,** and an HMDT process **518.** MTP level 1 and 2 processes **512** provide the facilities necessary to send and receive digital data over a particular physical media / physical interface, as well as to provide error detection / correction and sequenced delivery of all SS7 message packets. I/O queue **514** provides for temporary buffering of incoming and outgoing signaling message packets. MTP level 3 HMDC process **516** receives signaling messages from the lower processing layers and performs a discrimination function, effectively determining whether an incoming SS7 message packet requires internal processing or is simply to be through switched. HMDT process **518** handles internal routing of SS7 message packets that require additional processing prior to final routing. Once again, it should be appreciated that a LIM card may contain more functional processes than those described above. The above discussion is limited to LIM functionality associated with the basic processing of in-bound signaling messages.

DCM **510,** shown in Figure 3, generally includes an I/O buffer or queue **540** and an IP level 1 & 2 process **542.** It will be appreciated that outgoing message packets routed through the DCM **510** will be transmitted out of the FEP routing node **500** and into IP network **216** via IP communication link **218.** As the SS7 and IP communication protocols are not inherently compatible, all SS7 message packets that are to be sent into the IP network **216** are first encapsulated within a TCP/IP routing envelope prior to transmission. This IP encapsulation is performed on the DCM **510** by the IP level 1 & 2 process **542.** Preferred packet formats for encapsulating various types of SS7 messages in IP packets are described in Internet Engineering Task Force (IETF) INTERNET DRAFT entitled "Transport Adapter Layer Interface", May 28, 1999, the disclosure of which is incorporated herein by reference in its entirety. Furthermore, a Tekelec Transport Adapter Layer Interface (TALI^{tm}) is described in commonly-assigned, co-pending U.S. Provisional Patent Application Serial No. 60/137,988, the disclosure of which is incorporated herein by reference in its entirety.

Once again, the description of LIM and DCM sub-components provided above is limited to those sub-components that are relevant to the sample implementation scenarios illustrated herein. For a comprehensive discussion of additional LIM and DCM operations and functionality, the above-referenced Tekelec publications can be consulted.

With regard to DACM card **508,** it will be appreciated from Figure 3 that DACM generally includes the database and control processes necessary to achieve the front end processing (FEP) functionality of the present invention. The DACM **508** shown in Figure 3 is comprised, in part, of a signaling connection control part (SCCP) subsystem **520,** an SCCP controller, known as a signaling connection routing controller (SCRC) process **522,** and a database access control (DAC) process **524.** SCCP subsystem **520** is responsible for receiving and preliminary processing of incoming SCCP protocol message packets. The SCRC process **522** is responsible for discrimination of signaling messages at the SCCP level, and for distributing the signaling messages to a higher processing level when appropriate. In the configuration shown in Figure 3, the next highest processing level is represented by the DAC process **524.**

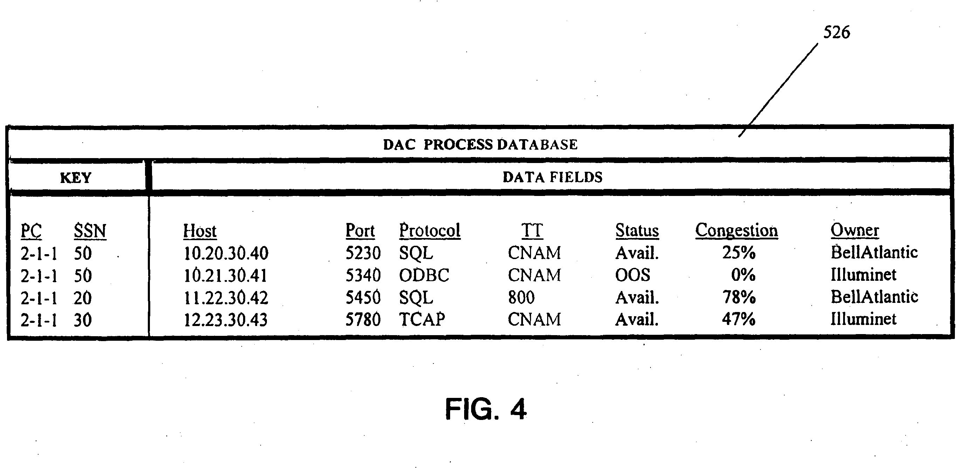

DAC process **524** includes a DAC database **526** and a DAC protocol translation process **528,** as indicated in Figure 3. DAC process **524** is generally responsible for examining properties or characteristics of an incoming message and determining what, if any, processing is required. Such incoming message properties or characteristics might include, but are not limited to: the origination point code (OPC); destination point code (DPC); subsystem (SSN); and translation type (TT). DAC process **524** is also responsible for monitoring and storing information related to the operating status of network database or SCP nodes which have been provisioned for FEP servicing by the FEP routing node **500.** Such operating status information is also stored in DAC database **526** and might include, but is not limited to: node In Service / node Out Of Service indicators; overall node congestion indicators; and link specific congestion indicators. In addition to operating status type information, DAC database **526** can also contain information related to database or SCP node ownership. Consequently, message routing decisions can be based, at least in part, upon database or SCP node ownership. Along with such operating status and ownership information, the DAC database **526** maintains a set of SS7 to IP routing address translation instructions, all of which are generally illustrated in Figure 4. It will be further appreciated that DAC protocol translation process **528** is provisioned to translate an incoming database query or response message into any of a variety of provisioned database protocols (e.g., structured query language (SQL), open database connectivity (ODBC), etc.) depending upon the protocol dictated by a particular SCP or database node. Once DAC processing is complete, the resulting message is passed to an HMRT process **532** for internal routing to the appropriate outbound LIM or DCM module.

It will be appreciated from Figure 3 that DACM **508** is in communication with and serviced by an Operations Administration and Maintenance (OAM) system **550.** In general, an OAM system provides a mechanism whereby network routing address information contained within the DAC process **524** can be externally provisioned or dynamically updated. As the interaction between FEP routing node 500 and OAM **550** is not particularly relevant to the present invention, a detailed discussion of such OAM system functionality will not be presented herein. It should suffice to state that the OAM **550** maintains the routing database component of the DAC process **524** with the most current network routing address information available at any given time.

In the embodiment shown in Figure 3, the DAC process **524** resides in one or more blocks of high speed random access memory (RAM) that are located on DACM card **508.** However, it will be appreciated by those skilled in the art of high-performance computing systems that such a software process and any databases associated therewith could be configured such that some or all of the information is stored on a high density, fast access physical storage media such as magnetic or optical discs.

As indicated in Figure 4, the DAC database component **526** is comprised of a series of entries or records, with each record containing a number of data fields including, but not limited to: a point code (PC) field; a subsystem (SSN) field; an IP host name field; an IP port field; a database or SCP node protocol field; a service or translation type (TT) field; a node status field; a node congestion field; and an owner field.

Once again, DACM **508** also contains HMRT process **532** that is responsible for the routing of message packets once DAC processing has been completed. That is, the HMRT process **532** determines to which DCM or LIM card a message packet should be internally routed for subsequent outbound transmission into the communication network.

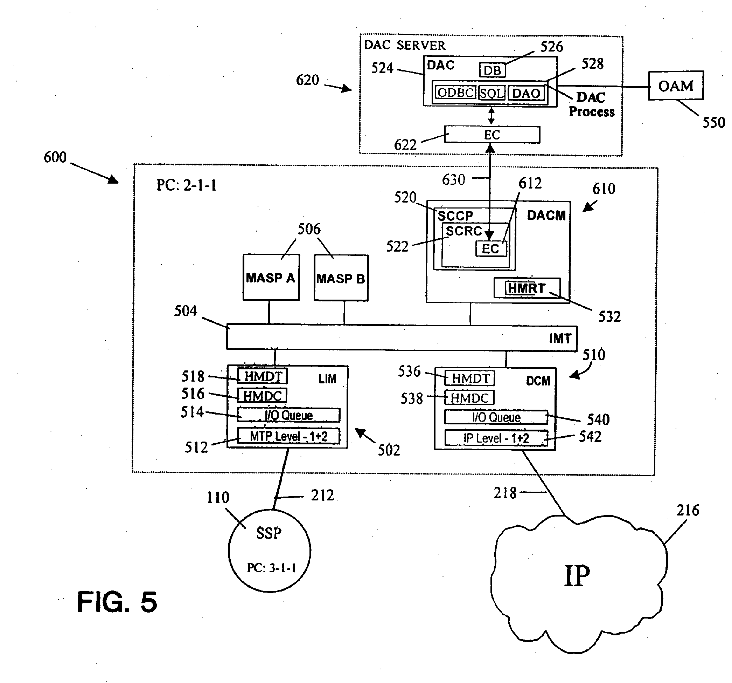

Shown in Figure 5 is another embodiment of the FEP routing node of the present invention, generally indicated by the numeral **600.** FEP routing node **600** is identical in overall function to the FEP routing node embodiment illustrated in Figure 3 and described above. In most respects, the form of FEP routing node **600** is identical to the FEP routing node **500** shown in figure 3. That is, FEP packet router node **600** generally includes a high speed interprocessor message transport (IMT) communications bus **504,** and a number of distributed processing modules or cards including; a pair of maintenance and administration subsystem processors (MASPs) **506,** an SS7 capable link interface module (LIM) **502,** an IP capable database communication module (DCM) **510.** Once again, it will be appreciated that these modules are physically connected to IMT bus **504** such that signaling and other type messages may be routed internally between all active cards or modules and that, for simplicity of illustration, only a single LIM **502** and DCM **510** are depicted. However, as with node **500,** it should be appreciated that the distributed, multi-processor architecture of FEP routing node **600** also facilitates the deployment of multiple LIM, DCM and other cards, all of which could be simultaneously connected to and communicating via IMT bus **504.**

In the case of FEP routing node **600,** it will be appreciated from figure 5 that the functionality of DACM card **508,** as described above, is now provided by a DACM card **610 in** combination with an external database access control (DAC) server **620.** Once again, it will be appreciated the combination of DACM card **610** and DAC server **620** includes the database and control processes necessary to achieve the front end processing (FEP) functionality of the present invention. The DACM card **610** shown in Figure 5 includes a signaling connection control part (SCCP) subsystem **520,** a description of which was provided above. Also, as with the previously discussed embodiment, DACM card **610** includes an SCCP controller known as a signaling connection routing controller (SCRC) process **522.** However, unlike the previous embodiment described above, DACM **610** employs a high-speed Ethernet controller (EC) process **612.** Once again, as described above, the SCCP subsystem **520** is responsible for receiving and preliminary processing of incoming SCCP protocol message packets, while the SCRC process **522** is responsible for discrimination and subsequent distribution of signaling messages at the SCCP level. In the case of DACM card **610,** messages that satisfy the SCRC discrimination criteria are distributed or directed to the high-speed Ethernet controller process **612.** EC process **612** is in turn responsible for controlling the process of communicating messages, via an Ethernet connection **630,** to and from the associated DAC server **620.** More particularly, DAC server **618** includes a corresponding high-speed Ethernet controller process **622** that serves as the communications interface between DACM card **610** and an on-board DAC process **524.** Once again, it will be appreciated that DAC process **524** generally includes a DAC database process **526** and a DAC protocol translation process **528,** and is responsible for determining whether front end processing service is to be provided by the FEP routing node. DAC process **524** is also responsible for monitoring and storing information related to the operating status of provisioned network database or SCP nodes. As discussed previously, in addition to operating status type information, DAC process also contains information related to database or SCP node ownership. Consequently, message routing decisions can be based, at least in part, upon database or SCP node ownership. Along with such operating status and ownership information, the DAC database process **526** maintains a set of routing address translation instructions, which are generally illustrated in Figure 4. It will be further appreciated that DAC protocol translation process **528** is provisioned to translate incoming database query and response messages into any of a variety of database query protocols (e.g., SQL, ODBC, etc.) depending upon the database protocol dictated by a particular destination SCP or database node. Once DAC processing is complete, the resulting message is passed to an HMRT process **532** for internal routing to the appropriate outbound LIM or DCM module.

Once again, it will be appreciated from Figure 5 that DAC server **620** is in communication with and serviced by an operations administration and maintenance (OAM) system **528,** in much the same manner as that described above for DACM **508** in Figure 3.

In the embodiment shown in Figure 5, the DAC process **524** resides in one or more blocks of high speed random access memory (RAM) that are located within the DAC server **620.** However, it will be appreciated by those skilled in the art of high-performance computing systems that such a software process and any databases associated therewith could be configured such that some or all of the information is stored on a high density, fast access physical storage media such as magnetic or optical discs.

Once again, as indicated in Figure 4, the DAC database component **526** of DAC server **620** is comprised of a series of entries or records, with each record containing a number of data fields including, but not limited to: a point code (PC) field, a subsystem (SSN) field, an IP host name field, an IP port field, a database or SCP node protocol field, a service or translation type (TT) field, a node status field, a node congestion field, and an owner field.

### DAC Query Transaction Processing

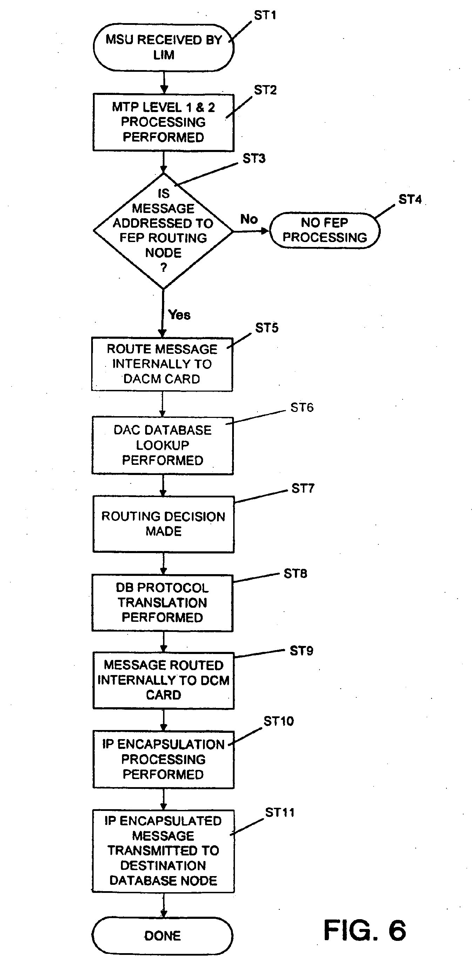

For purposes of illustration, the path of a typical SS7 TCAP query message requiring FEP routing node service is traced, in Figure 3, from reception at the FEP routing node **500** by the inbound LIM **502,** through processing by DACM card **508,** and on to the outbound DCM **510.** A detailed flow chart of FEP related query message processing steps is presented in Figure 6, and may be used in conjunction with the schematic diagram shown in Figure 3 to better understand FEP servicing methodology.

Beginning with step **ST1,** an incoming TCAP query message is received at the inbound LIM module **502.** In step **ST2,** the incoming TCAP query message is received and processed by the MTP Level 1 and 2 process **512.** With MTP Level 1 and 2 processing complete, the signaling message packet is temporarily buffered in the I/O queue **514** before being passed up the stack to the MTP Level 3 HMDC process **516,** where SCCP type discrimination processing is performed. In the example shown in Figure 2, HMDC process **516** examines the message packet and determines that the DPC of the packet is the PC (2-1-1) of the FEP routing node **500** (**ST3**). Consequently, further processing of the SCCP MSU within the FEP routing node is assumed to be necessary, and the packet is passed to the HMDT process **518.**

In this particular example, it is assumed that the FEP routing node **500** is provisioned to respond to query messages that are addressed to the true or capability point code of the FEP routing node **500.** However, as mentioned previously, FEP routing node **500** could easily be provisioned to provide FEP-type processing in response to many point codes other than that of the FEP routing node. While it may prove to be advantageous for service providers to implement an FEP routing node of the present invention in a communications network in a manner such that all query messages requiring FEP-type processing are addressed to the same PC as that of the FEP routing node, it is not essential to the operation of the present invention.

The HMDT process **518** examines the service indicator (SI) field of the incoming TCAP MSU, which indicates that the message is of an SCCP type. As such, HMDT process **518** places the incoming MSU on high speed IMT bus **504** for transport to DACM **508** and subsequent FEP servicing **(ST5).**

The internally routed TCAP MSU is received by the DACM resident SCCP process **520,** and subsequently examined by SCRC process **522** that is resident on DACM card **508.** Upon successful verification, the TCAP MSU is directed to DAC application **524** for further processing. DAC application processing begins with a general determination of incoming message type. Following the determination that the message is a TCAP-type query message, DAC process **524** proceeds with verification of the pointers and field lengths associated with the TCAP message. Given that the message is a TCAP-type query message, a lookup is performed in DAC database **526** based on PC and SSN information contained within the message **(ST6).** Referring again to Figure 4, it will be appreciated that in the case of an incoming TCAP query message addressed to PC: 2-1-1 and SSN: 50, the DAC database lookup would return two matching records. DAC process **524** then examines both returned routing translation records and makes a final routing decision based on a pre-defined set of selection rules or conditions.

Once again, as indicated in Figure 4, it will be appreciated that one of the two returned routing translation records contains a status field value which indicates that the SCP or database node with which it is associated is currently out of service (OOS). Clearly, routing the TCAP query message to an SCP or database node that is OOS would not be desirable. Thus, in this particular example, DAC process **524** opts to route the incoming TCAP query message to the SCP or database node with an IP address of 10.20.30.40: port 5230 **(ST7).** As such, routing label information within the message packet is modified to reflect this change of destination routing address. In step **ST8,** using information returned by the DAC database lookup that identifies the protocol employed by the database residing at IP address 10.20.30.40: port 5230, DAC process **524** next directs the TCAP query to the DAC protocol translation process **528.** In this case, DAC protocol translation process **528** uses the database query information contained within the TCAP message to construct an equivalent SQL query statement. This new SQL query statement is then substituted for the original database query content of the incoming TCAP message.

With message routing address translation and query protocol translation processing complete, the modified query message is next passed to HMRT process **532** for internal routing to the appropriate DCM card **(ST9).** Consequently, the modified message packet is internally routed across the IMT bus **504** to DCM **510,** where it is generally received by the I/O queue process **540.** Eventually, the modified message packet is passed from the I/O queue process **540** on to the IP Level 2 and Level 1 process **542** where properly formatted IP routing label information is applied to the packet prior to transmission into the associated IP network **216 (ST10).** Following successful IP Level 1 and 2 processing, the message packet is transmitted into the IP network **216** and generally towards the destination SCP or database node as identified by the previous FEP processing **(ST11)**.

It will also be appreciated that the processing of an incoming TCAP query message is performed in a very similar manner for the embodiment of the FEP routing node **600** shown in Figure 5. In the case of the configuration contemplated in Figure 5, messages arriving at the DACM card **610** are simply passed to an external DAC server **620** via a high-speed Ethernet connection **630** prior to DAC database lookup and protocol translation processing. In all other respects, processing of an incoming TCAP query message similar to that described above, would be identical in the FEP routing node **600.**

Although the example presented above relates specifically to the reception and subsequent processing of a TCAP query message bound for an SCP or database node, it will be appreciated by those skilled in the art, that the FEP processing node of the present invention can easily be provisioned to intercept and process subsequent response messages generated by such SCP or database nodes. Such response message processing could include database protocol translation, so as to translate the database response statement into a protocol that is usable by the network element that originated or initiated the query transaction.

### DAC Network Management Message Processing

As discussed briefly above, one aspect of FEP processing includes routing address translation that is based, at least in part, on the congestion and overall operational status of potential destination SCP or database nodes. Consequently, the FEP routing node, and more specifically DAC process **524,** must be capable of acquiring and maintaining accurate information related to the status of the SCP or database nodes that are provisioned to have FEP service provided by the FEP routing node.

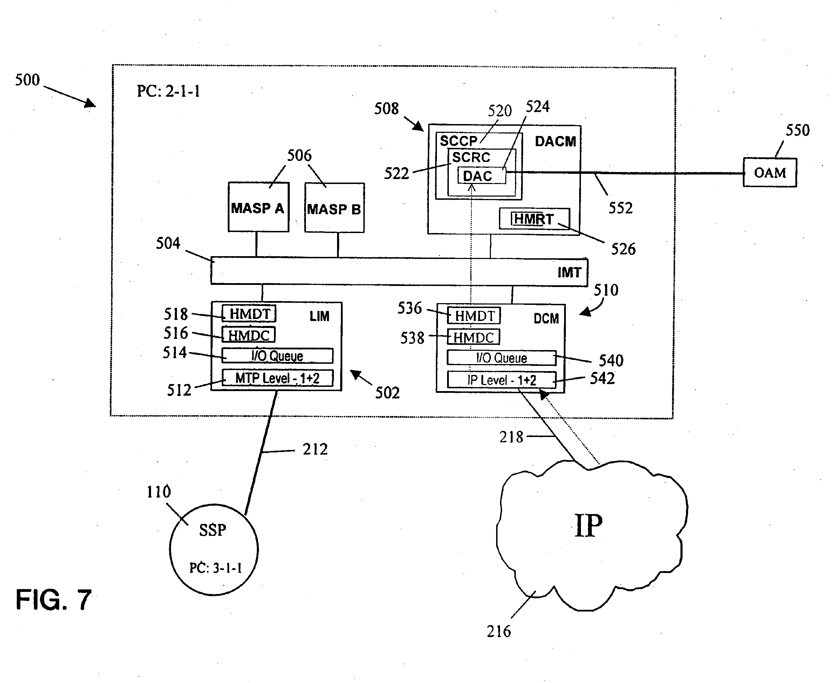

Given such functional requirements, it will be appreciated that Figure 7 generally illustrates the receipt and subsequent internal processing of a typical network management message received from an SCP or database node residing in or connected to IP network **216.** More particularly, FEP routing node **500** is shown receiving a network management message associated with or sent by an SCP or database node that is provisioned to have FEP service provided by the FEP routing node **500.** The network management message includes information related to the operational status of the related node or the communication pathway(s) that form the effective communication link between the related node and the FEP routing node 500. Examples of such status information might include, but are limited to; in service / out of service indicators, node congestion indicators, and link congestion indicators.

As indicated in Figure 7, the network management message is received by DCM card **510** and subsequently TCP encapsulated and processed by the IP Level 1 & 2 process **542.** With IP Level 1 and 2 processing complete, the message is passed to and temporarily buffered in I/O queue process **540** before being directed on to HMDC process **538.** HMDC process **538** examines the incoming message packet and determines that the message contains information that is required by one or more DACM cards. Consequently, HMDC process **538** passes the message packet to HMDT process **536** for internal routing to the appropriate DACM card(s). In the example implementation shown in Figure 7, HMDT process **536** internally routes the message packet via IMT bus **504** to the only provisioned DACM card in the system, DACM **508.** It will be appreciated that if multiple DACM cards were simultaneously provisioned in the FEP routing node, HMDT process **536** could direct multiple copies of the network management message packet to each of the provisioned DACM cards connected to IMT bus **504.**

Once the network management message packet is received by DACM card **508,** the message is generally verified and processed by the SCCP and SCRC processes **520** and **522,** respectively. The verified and processed network management message is then passed to the DAC process **524.** DAC process **524** examines the message packet, extracts the necessary node status information, and updates the appropriate records in the DAC database **526.**

Thus, by continuously monitoring and processing network management-type messages generated by the SCP and database nodes provisioned for FEP service by the FEP routing node of the present invention, routing translation data utilized by the FEP routing node to make routing decisions can be maintained in an accurate and useful state.

Once again, it will be appreciated that the FEP routing node configuration shown in Figure 7 includes all DAC related processing modules onboard the DACM card **508.** However, processing of network management messages would be similar in the case of FEP routing node **600,** that is generally illustrated in Figure 5. In the case of the configuration contemplated in Figure 5, messages arriving at the DACM card **610** are simply passed to an external DAC server **620** via a high-speed Ethernet connection **630** prior to updating of the DAC database **526.** In all other respects, processing of an incoming network management message similar to that described above, would be identical in the FEP routing node **500.**

### FEP Routing Node Network Implementations

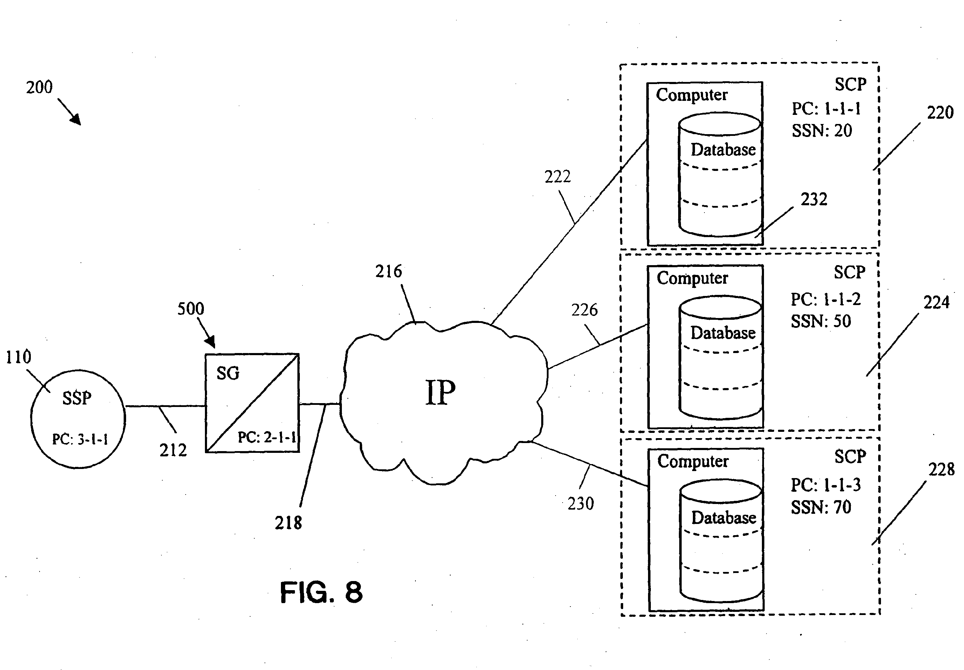

Shown in Figures 8 - 11 are several examples of practical network implementations of an FEP routing node of the present invention. It will be appreciated that the particular embodiment of the FEP routing node chosen to illustrate these sample implementations is the same as that shown in figure 3 and described in detail above. However, other embodiments of the FEP routing node of the present invention could just as effectively be employed in these sample implementations, including the embodiment illustrated in Figure 5.

Shown in Figure 8 is a typical telecommunications network, generally indicated by the numeral 200. Telecommunications network **200** includes an end office or SSP **110,** an FEP routing node **500,** an IP data network **216,** and three SCP nodes **220, 224,** and **228.** It will be appreciated that SSP **110** is communicatively coupled to FEP routing node **500** via an SS7 communication link **212.** However, as mentioned previously, it is not essential that the link **212** be an SS7-type communication link. Such a link could be an IP link carrying encapsulated SS7 signaling messages. In any event, FEP routing node is in turn communicatively coupled to IP network **216** via an IP link or connection **218.** Also connected to IP network **216** via IP connection **222** is SCP **220.** In a similar manner, SCP **224** and SCP **228** are connected to IP network **216** via IP connections **226** and **230,** respectively.

The network configuration shown in Figure 8 is one of the more simple implementations of an FEP routing node of the present invention. When compared with the prior art network configuration illustrated in figure 1, it will be appreciated that the inclusion of FEP routing node **500** in Figure 8 allows each of the provisioned SCPs **220, 224,** and **228** to eliminate dedicated, internal FEP modules. Consequently, SCP **220** simply includes a computing platform **232** that serves a database back end processor. In a similar manner, SCP **224** and SCP **228** also include back end database computing platforms. Once again, it should be noted that each SCP **220, 224,** and **228** is not required to implement a separate FEP module.

In the example shown in Figure 8, all of the SCP nodes are identified by a unique SS7 point code, each of which is different from the point code assigned to the FEP routing node (2-1-1). More particularly, SCP **220** is assigned a point code of 1-1-1, while SCP **224** has a point code of 1-1-2, and SCP **228** has a point code of 1-1-3. It will also be appreciated that, as each of these SCP nodes is connected to the FEP routing node **500** via the IP data network **216,** each SCP also has a uniquely assigned IP address in the form of a host name and port.

As such, when FEP routing node **500** receives a TCAP query message from SSP **110** that is destined for the SCP with point code of 1-1-1 and SSN of 20, FEP routing node might simply perform database protocol translation-type processing on the message, encapsulate the modified message in a properly addressed IP packet, and route the modified message on to SCP **220.** Any other processing that was previously performed by FEP **128** shown in Figure 1 could also be performed by the FEP routing node **500.**

One of the great advantages of even such a simple implementation of a FEP routing node of the present invention is apparent upon closer examination of Figure 8. This advantage being that a single Front End Processing module, properly integrated within a routing node of the present invention, can accommodate all of the FEP tasks associated with each of the SCPs **220, 224,** and **228.** Such an architecture presents SCP node owners with a major cost savings, which can ultimately be passed on to the end consumer.

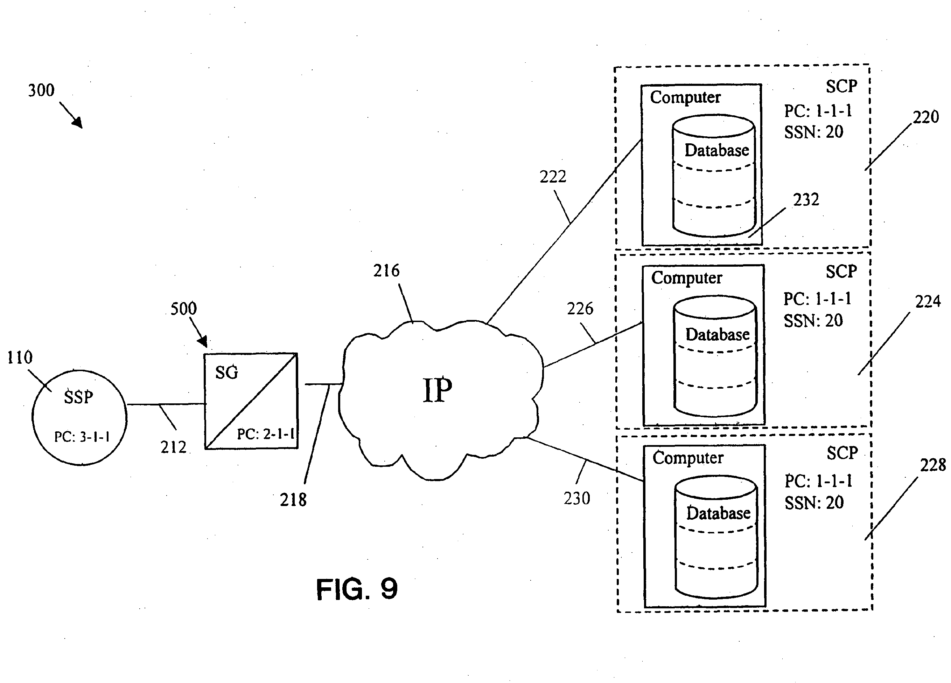

Illustrated in Figure 9 is another typical telecommunications network, generally indicated by the numeral **300.** As with the previously described telecommunications network **200,** network **300** also includes an End Office or SSP **110,** an FEP routing node **500,** an IP data network **216,** and three SCP nodes **220, 224,** and **228.** It will be appreciated that SSP **110** is communicatively coupled to FEP routing node **500** via an SS7 communication link **212.** FEP routing node **500** is in turn communicatively coupled to IP network **216** via an IP link or connection **218.** Also connected to IP network **216** via IP connections **222, 226** and **230** are SCPs **220, 224,** and **228,** respectively.

Once again, when compared with the prior art network configuration illustrated in Figure 1, it will be appreciated that the inclusion of FEP routing node **500** in Figure 9 allows each of the provisioned SCPs **220, 224,** and **228** to eliminate dedicated, internal FEP modules. Consequently, SCP **220** simply includes a computing platform **232** that serves a database back end processor. In a similar manner, SCP **224** and SCP **228** also include back end database computing platforms.

However, it will be appreciated that the network configuration shown in Figure 9 is a slightly more complex implementation of an FEP routing node than that shown in Figure 8. In the example shown in Figure 9, all of the SCP nodes are identified by the same SS7 point code (1-1-1), which is different from the point code assigned to the FEP routing node (2-1-1) and all of the SCPs are provisioned with the same subsystem, SSN 20. However, as each of these SCP nodes is connected to the FEP routing node **500** via the IP data network **216,** each individual SCP will still have a unique assigned IP address in the form of a Host name and Port.

As such, when FEP routing node **500** receives a TCAP query message from SSP **110** that is destined for the SCP with point code of 1-1-1 and SSN of 20, FEP routing node might make a decision to route based on the operational status or congestion status of the three SCPs **220, 224** and **228.** Such load shedding or load sharing among the three similarly provisioned SCPs will ultimately lead to superior overall network performance. The FEP routing node **500** might further perform database protocol translation-type processing on the message, encapsulate the modified message in a properly addressed IP packet, and route the modified message on to the selected SCP. Once again, any additional processing that was previously performed by FEP **128** shown in Figure 1 could also be performed by the FEP routing node **500.**

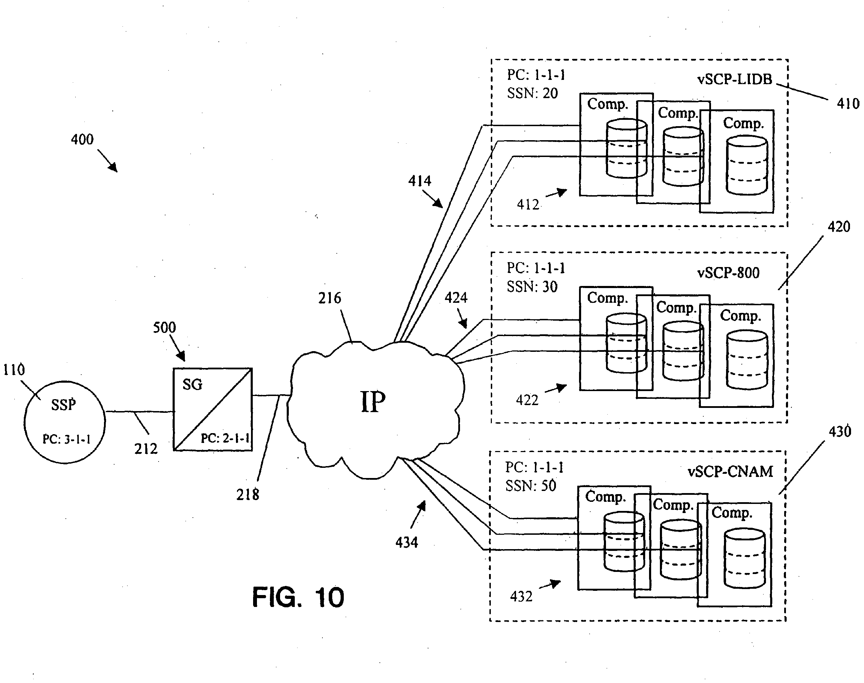

Illustrated in Figure 10 is yet another typical telecommunications network, generally indicated by the numeral **400.** As with the previously described telecommunications network **200,** network **400** also includes an end office or SSP **110,** an FEP routing node **500,** an IP data network **216,** and three SCP nodes **410, 420,** and **430.** It will be appreciated that SSP **110** is communicatively coupled to FEP routing node **500** via an SS7 communication link **212.** FEP routing node **500** is in turn communicatively coupled to IP network **216** via an IP link or connection **218.** Also connected to IP network **216** via the plurality of IP connections **414, 424** and **434** are SCPs **410, 420,** and **430,** respectively. In this sample implementation, each SCP is comprised of multiple back end database processors which effectively form a series of virtual SCP (vSCP) nodes. More particularly, SCP **410** is comprised of a series of back end database processors generally indicated by the numeral **412,** all of which are represented by a point code of 1-1-1 and subsystem of 20. In this example, it is assumed that SSN 20 of SCP **410** provides LIDB-type database information. SCP **420** is comprised of a series of back end database processors generally indicated by the numeral **422,** all of which are represented by a point code of 1-1-1 and subsystem of 30. In this example, it is assumed that SSN 30 of SCP **420** provides 800 number-type database information. SCP **430** is comprised of a series of back end database processors generally indicated by the numeral **432,** all of which are represented by a point code of 1-1-1 and subsystem of 50. In this example, it is assumed that SSN 50 of SCP **410** provides CNAM-type database information.

Once again, when compared with the prior art network configuration illustrated in Figure 1, it will be appreciated that the inclusion of FEP routing node **500** in Figure 10 allows each of the provisioned SCPs **410, 420,** and **430** to eliminate dedicated, internal FEP modules that would have otherwise have been associated with each back end database processor.

It will be appreciated that the network configuration shown in Figure 10 is a still slightly more complex implementation of an FEP routing node even than that shown in Figure 9. In the example shown in Figure 10, all of the SCP nodes are identified by the same SS7 point code (1-1-1), which is different from the point code assigned to the FEP routing node (2-1-1) yet each SCP node has a different subsystem provisioned for service. Once again, as each of the back end processors that comprise these SCP nodes is connected to the FEP routing node **500** via the IP data network **216,** each individual back end processor of each SCP will still have a unique assigned IP address in the form of a host name and port.

As such, when FEP routing node **500** receives a TCAP query message from SSP **110** that is destined for the SCP with point code of 1-1-1 and SSN of 50, FEP routing node might make a decision to route based on the operational status or congestion status of the multiple back end processors **432** that are associated with SCP **430.** Such load shedding or load sharing among multiple, similarly provisioned back end processors will ultimately lead to superior overall network performance. The FEP routing node **500** might further perform database protocol translation-type processing on the message, encapsulate the modified message in a properly addressed IP packet, and route the modified message on to the selected SCP back end processor. Once again, any additional processing that was previously performed by FEP **128** shown in Figure 1 could also be performed by the FEP routing node **500.**

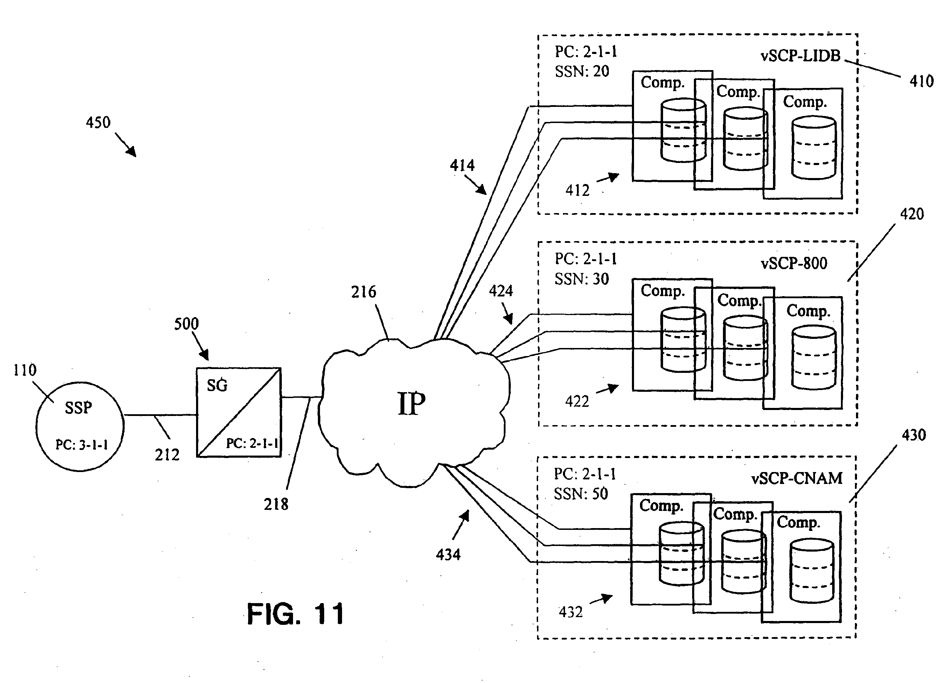

Illustrated in Figure 11 is still another typical telecommunications network, generally indicated by the numeral **450.** As with the previously described telecommunications network **200,** network **450** also includes an End Office or SSP **110,** an FEP routing node **500,** an IP data network **216,** and three SCP nodes **410, 420,** and **430.** It will be appreciated that SSP **110** is communicatively coupled to FEP routing node **500** via an SS7 communication link **212.** FEP routing node **500** is in turn communicatively coupled to IP network **216** via an IP link or connection **218.** Also connected to IP network **216** via the plurality of IP connections **414, 424** and **434** are SCPs **410, 420,** and **430,** respectively. Once again, in this sample implementation, each SCP is comprised of multiple back end database processors which effectively form a series of virtual SCP (vSCP) nodes. More particularly, SCP **410** is comprised of a series of back end database processors generally indicated by the numeral **412,** all of which are represented by a point code of 2-1-1 and subsystem of 20. In this example, it is assumed that SSN 20 of SCP **410** provides LIDB-type database information. SCP **420** is comprised of a series of back end database processors generally indicated by the numeral **422,** all of which are represented by a point code of 2-1-1 and subsystem of 30. In this example, it is assumed that SSN 30 of SCP **420** provides 800 number-type database information. SCP **430** is comprised of a series of back end database processors generally indicated by the numeral **432,** all of which are represented by a point code of 2-1-1 and subsystem of 50. In this example, it is assumed that SSN 50 of SCP **410** provides CNAM-type database information.

Once again, when compared with the prior art network configuration illustrated in Figure 1, it will be appreciated that the inclusion of FEP routing node **500** in Figure 10 allows each of the provisioned SCPs **410, 420,** and **430** to eliminate dedicated, internal FEP modules that would have otherwise have been associated with each back end database processor.

It will be appreciated that the network configuration shown in Figure 11 is perhaps the most powerful implementation of an FEP routing node of the present invention. It should be noted, as mentioned above, that in the example shown in Figure 11, all of the SCP nodes are identified by the same SS7 point code (2-1-1), which is identically the same point code assigned to the FEP routing node (2-1-1) yet each SCP node has a different subsystem provisioned for service. Once again, as each of the back end processors that comprise these SCP nodes is connected to the FEP routing node **500** via the IP data network **216**, each individual back end processor of each SCP will still have a unique assigned IP address in the form of a host name and a port. Those skilled in the art of telecommunications network operation will appreciate the implications and significance of such a network addressing scheme. From a practical standpoint, such a network architecture allows network operators to simply address all query messages to an FEP routing node, where the intelligence resides to determine which SCP or database should receive any given query message. Thus, as SCP or database nodes are added to the network, only routing information stored in the FEP routing node need be updated to reflect the network architecture change. In other words, the SCP or database portion of the communications network becomes essentially transparent to any service provider launching database queries. All the service providers need specify is the type of database service that is being requested (e.g., a subsystem or translation type), and the point code of the FEP routing node.

As such, when FEP routing node **500** receives a TCAP query message from SSP **110** that is destined for the SCP with point code of 2-1-1 and SSN of 50, FEP routing node might make a decision to route based on the operational status or congestion status of the multiple back end processors **432** that are associated with SCP **430.** Such load shedding or load sharing among multiple, similarly provisioned back end processors will ultimately lead to superior overall network performance. The FEP routing node **500** might further perform database protocol translation-type processing on the message, encapsulate the modified message in a properly addressed IP packet, and route the modified message on to the selected SCP back end processor. Once again, any additional processing that was previously performed by FEP **128** shown in Figure 1 could also be performed by the FEP routing node **500.**

It will be understood that various details of the invention may be changed without departing from the scope of the invention. Furthermore, the foregoing description is for the purpose of illustration only, and not for the purpose of limitation--the invention being defined by the claims.

## Claims

1. A network element for providing service control point (SCP) front end processing (FEP) service and routing data packets through a communications network, the network element comprising:
(a) a communication module capable of transmitting data packets to and receiving data packets from a communications network;
(b) packet discrimination means for determining whether a data packet received from the communications network is intended for an SCP node that is provisioned to receive front end processing (FEP) service;
(c) a database access control (DAC) database containing information related to SCP nodes that are provisioned to receive FEP service; and
(d) DAC means for querying the DAC database and modifying the received packet to include information returned by the DAC database, wherein the network element is adapted to provide FEP service for a plurality of SCP nodes being separate from the network element and to eliminate the need for the SCP or database nodes to have individual front end processors.

2. The network element of claim 1 wherein the received data packet is a signaling system 7 (SS7) signaling message.

3. The network element of claim 2 wherein the SS7 signaling message is a transaction capabilities application part (TCAP) message signaling unit (MSU).

4. The network element of claim 3 wherein the TCAP MSU contains a database query message.

5. The network element of claim 1 wherein the communications network is an SS7 network.

6. The network element of claim 1 wherein the communications network is an Internet protocol (IP) network.

7. The network element of claim 1 wherein the communications network is an asynchronous transfer mode (ATM) network.

8. The network element of claim 1 wherein the communication module is a signaling system 7 (SS7) link interface module (LIM).

9. The network element of claim 1 wherein the communication module is an Internet protocol (IP) database communication module (DCM).

10. The network element of claim 1 wherein the DAC database includes a plurality of records and each DAC database record includes an IP network address associated with one of the SCP nodes.

11. The network element of claim 1 wherein the DAC database includes a plurality of records and each DAC database record includes operational status information associated with one of the SCP nodes.

12. The network element of claim 1 wherein the DAC database includes a plurality of records and each DAC database record includes ownership information associated with one of the SCP nodes.

13. The network element of claim 1 wherein the DAC database includes a plurality of records and each DAC database record includes database protocol information associated with one of the SCP nodes.

14. The network element of claim 1 wherein the DAC database includes a plurality of records and each DAC database record includes service type identification information associated with one of the SCP nodes.

15. The network element of claim 14 wherein the service type identification information identifies an advanced intelligent network (AIN) service.

16. The network element of claim 14 wherein the service type identification information is a translation type (TT) value.

17. The network element of claim 14 wherein the service type identification information is a subsystem number (SSN).

18. The network element of claim 14 wherein the service type identification information identifies a calling name (CNAM) service.

19. The network element of claim 14 wherein the service type identification information identifies a line information database (LIDB) service.

20. The network element of claim 14 wherein the service type identification information identifies a toll free number (800) service.

21. The network element of claim 14 wherein the service type identification information identifies a local number portability (LNP) service.

22. The network element of claim 14 wherein the service type identification information identifies a presence service.

23. The network element of claim 8 wherein the packet discrimination means reside on the LIM.

24. The network element of claim 1 wherein the DAC database is integral with and contained within the network element.

25. The network element of claim 1 wherein the DAC database is located on an external database server communicatively coupled to the network element.

26. The network element of claim 1 wherein data that comprises the DAC database is maintained in high speed, random access memory.

27. The network element of claim 1 wherein data that comprises the DAC database is maintained on high speed, optical disc storage media.

28. The network element of claim 1 including DAC protocol translation means for modifying the received data packet to include predetermined database protocol information.

29. The network element of claim 28 wherein the DAC protocol translation means are capable of translating an SCP query to or from a structured query language (SQL) database protocol.

30. The network element of claim 28 wherein the DAC protocol translation means are capable of translating an SCP query to or from an open database connectivity (ODBC) database protocol.

31. The network element of claim 1 wherein the packet discrimination means are adapted to examine a destination network address in the received data packet in determining whether the data packet is intended for an SCP node that is provisioned to receive FEP service.

32. The network element of claim 31 wherein the destination network address includes an SS7 destination point code (DPC) and subsystem (SSN).

33. The network element of claim 32 wherein the SS7 DPC is the same as an SS7 PC assigned to the network element.

34. The network element of claim 32 wherein the SSN corresponds to a SSN that is provisioned for FEP service.

35. The network element of claim 1 wherein the packet discrimination means are adapted to examine a translation type (TT) value in the received data packet in determining whether the data packet is intended for an SCP node that is provisioned to receive FEP service.

36. The network element of claim 1 wherein the packet discrimination means are adapted to examine a subsystem number (SSN) value in the received data packet in determining whether the data packet is intended for an SCP node that is provisioned to receive FEP service.

37. A method for providing service control point (SCP) front end processing service and for routing a data packet in a communications network, the method comprising:
providing, from a network element, FEP service for a plurality of SCPs being separate from the network element and eliminating the need for individual front end processors at the SCPs, wherein providing FEP service includes:
(a) at the network element having a first SS7 point code (PC), receiving a data packet having a first SS7 destination point code (DPC) from a communications network;
(b) determining whether the received data packet is intended for an SCP that is provisioned to receive front end processing (FEP) service;
(c) in response to determining that the received data packet is intended for an SCP that is provisioned to receive FEP service, performing a lookup in a database access control (DAC) database using key information contained in the received data packet;
(d) modifying the received data packet based on information returned by the DAC database lookup; and
(e) transmitting the modified data packet to one of the SCPs.

38. The method of claim 37 wherein the key information includes a subsystem number (SSN) value.

39. The method of claim 37 wherein the received data packet is a signaling system 7 (SS7) signaling message.

40. The method of claim 39 wherein the SS7 signaling message is a transaction capabilities application part (TCAP) message signaling unit (MSU).

41. The method of claim 40 wherein the TCAP MSU contains an SCP or database query message.

42. The method of claim 37 wherein the communications network is an SS7 network.

43. The method of claim 37 wherein transmitting the modified data packet to one of the SCPs comprises transmitting the modified data packet over an Internet protocol (IP) network.

44. The method of claim 37 wherein determining whether the received data packet is destined for an SCP that is provisioned to receive front end processing (FEP) service includes examining the DPC value in the received data packet.

45. The method of claim 44 wherein determining whether the received data packet is destined for an SCP that is provisioned to receive front end processing (FEP) service further includes examining a destination subsystem (SSN) value in the received data packet.

46. The method of claim 44 wherein the DPC is the same as the PC assigned to the first network element.

47. The method of claim 45 wherein the destination SSN value corresponds to a SSN that is provisioned for FEP service.

48. The method of claim 37 wherein the key information includes the first DPC and a SSN value.

49. The method of claim 37 wherein the key information includes a translation type (TT) value.

50. The method of claim 37 wherein modifying the received data packet includes modifying a packet routing label in the received data packet.

51. The method of claim 50 wherein modifying the routing label includes modifying the routing label based on SCP operational status information contained within the DAC database.

52. The method of claim 50 wherein modifying the routing label includes modifying the routing label based on SCP congestion status information contained within the DAC database.

53. The method of claim 50 wherein modifying the routing label includes modifying the routing label based on SCP ownership information contained within the DAC database.

54. The method of claim 50 wherein modifying the routing label includes modifying the routing label to include a destination IP network address.

55. The method of claim 37 wherein modifying the received data packet includes changing a protocol of a database query statement contained in the received packet.

56. The method of claim 55 wherein changing a protocol includes changing the protocol based on SCP protocol information contained within the DAC database.

57. The network element of claim 1 wherein providing FEP service for a plurality of SCP or database nodes comprises providing front end processing service at a signal transfer point (STP).

58. The method of claim 37 wherein providing FEP service from the first network element comprises providing front end processing service from a signal transfer point (STP).

## Patentansprüche

1. Netzelement zur Bereitstellung eines Dienstesteuerungspunkt-(service control point - SCP)-Vorverarbeitungs-(front end processing - FEP)-Dienstes und zum Routen von Datenpaketen durch ein Kommunikationsnetz, das Netzelement umfassend:
(a) ein Kommunikationsmodul, das eingerichtet ist, Datenpakete an ein Kommunikationsnetz zu übertragen sowie Datenpakete von diesem zu empfangen;
(b) Paketunterscheidungsmittel zum Bestimmen, ob ein von dem Kommunikationsnetz empfangenes Datenpaket für einen SCP-Knoten gedacht ist, der für den Empfang des Vorverarbeitungs-(FEP)-Dienstes bereitgestellt ist;
(c) eine Datenbankzugriffssteuerungs-(database access control - DAC)-Datenbank enthaltend Informationen über SCP-Knoten, die für den Empfang des FEP-Dienstes bereitgestellt sind;
(d) DAC-Mittel zum Abfragen der DAC-Datenbank und Modifizieren des empfangenen Pakets derart, dass dieses eine von der DAC-Datenbank zurückgesendete Information enthält, wobei das Netzelement angepasst ist zur Bereitstellung des FEP-Dienstes für eine Vielzahl von SCP-Knoten, die vom Netzelement getrennt sind, und zum Beseitigen der Notwendigkeit, dass die SCP- oder Datenbankknoten individuelle Vorverarbeitungsprozessoren aufweisen.

2. Netzelement nach Anspruch 1, wobei das empfangene Datenpaket eine Zeichengabenachricht des Zeichengabesystems Nr. 7 (SS7) ist.

3. Netzelement nach Anspruch 2, wobei die SS7-Zeichengabenachricht eine Nachrichtenzeichengabeeinheit (message signaling unit - MSU) für ein Anwenderteil für Transaktionsabwicklung (transaction capabilities application part - TCAP) ist.

4. Netzelement nach Anspruch 3, wobei die TCAP-MSU eine Datenbankabfragenachricht enthält.

5. Netzelement nach Anspruch 1, wobei das Kommunikationsnetz ein SS7-Netz ist.

6. Netzelement nach Anspruch 1, wobei das Kommunikationsnetz ein Internet-protokoll-(IP)-Netz ist.

7. Netzelement nach Anspruch 1, wobei das Kommunikationsnetz ein asynchrones Transfermodus-(ATM)-Netz ist.

8. Netzelement nach Anspruch 1, wobei das Kommunikationsmodul ein Zeichengabesystem-7-(SS7)-Link-Schnittstellenmodul (link interface module - LIM) ist.

9. Netzelement nach Anspruch 1, wobei das Kommunikationsmodul ein Internetprotokoll-(IP)-Datenbankkommunikationsmodul (database communiation module - DCM) ist.

10. Netzelement nach Anspruch 1, wobei die DAC-Datenbank eine Vielzahl von Datensätzen umfasst und jeder DAC-Datenbankdatensatz eine IP-Netzadresse umfasst, die einem der SCP-Knoten zugeordnet ist.

11. Netzelement nach Anspruch 1, wobei die DAC-Datenbank eine Vielzahl von Datensätzen umfasst und jeder DAC-Datenbankdatensatz eine Betriebsstatusinformation umfasst, die einem der SCP-Knoten zugeordnet ist.

12. Netzelement nach Anspruch 1, wobei die DAC-Datenbank eine Vielzahl von Datensätzen umfasst und jeder DAC-Datenbankdatensatz eine Eigentümerinformation umfasst, die einem der SCP-Knöten zugeordnet ist.

13. Netzelement nach Anspruch 1, wobei die DAC-Datenbank eine Vielzahl von Datensätzen umfasst und jeder DAC-Datenbankdatensatz eine Datenbankprotokollinformation umfasst, die einem der SCP-Knoten zugeordnet ist.

14. Netzelement nach Anspruch 1, wobei die DAC-Datenbank eine Vielzahl von Datensätzen umfasst und jeder DAC-Datenbankdatensatz eine Diensttypenkennungsinformation umfasst, die einem der SCP-Knoten zugeordnet ist.

15. Netzelement nach Anspruch 14, wobei die Diensttypenkennungsinformation einen Dienst des fortgeschrittenen intelligenten Netzes (advanced intelligent network - AIN) umfasst.

16. Netzelement nach Anspruch 14, wobei die Diensttypenkennungsinformation ein Übersetzungstyp-(translation type - TT)-Wert ist.

17. Netzelement nach Anspruch 14, wobei die Diensttypenkennungsinformation eine Subsystemnummer (SSN) ist.

18. Netzelement nach Anspruch 14, wobei die Diensttypenkennungsinformation einen Rufnamen-(calling name - CNAM)-Dienst identifiziert.

19. Netzelement nach Anspruch 14, wobei die Diensttypenkennungsinformation einen Leitungsinformationsdatenbank-(line information database - LIDB)-Dienst identifiziert.

20. Netzelement nach Anspruch 14, wobei die Diensttypenkennungsinformation einen gebührenfreien Nummerndienst (800) identifiziert.

21. Netzelement nach Anspruch 14, wobei die Diensttypenkennungsinformation einen Rufnummernportabilitäts-(local number portability - LNP)-Dienst identifiziert.

22. Netzelement nach Anspruch 14, wobei die Diensttypenkennungsinformation einen Anwesenheitsdienst identifiziert.

23. Netzelement nach Anspruch 8, wobei sich die Paketunterscheidungsmittel auf dem LIM befinden.

24. Netzelement nach Anspruch 1, wobei die DAC-Datenbank in dem Netzelement integriert und in diesem enthalten ist.

25. Netzelement nach Anspruch 1, wobei die DAC-Datenbank auf einem externen Datenbankserver angeordnet ist, der kommunikativ mit dem Netzelement verbunden ist.

26. Netzelement nach Anspruch 1, wobei Daten, die die DAC-Datenbank umfassen, in einem Hochgeschwindigkeits-RAM-Speicher verwaltet werden.

27. Netzelement nach Anspruch 1, wobei Daten, die die DAC-Datenbank umfassen, auf einem optischen Hochgeschwindigkeitsspeicherplattenmedium verwaltet werden.

28. Netzelement nach Anspruch 1, umfassend DAC-Protokollübersetzungsmittel zum Modifizieren des empfangenen Datenpakets derart, dass dieses eine vorgegebene Datenbankprotokollinformation enthält.

29. Netzelement nach Anspruch 28, wobei die DAC-Protokollübersetzungsmittel eingerichtet sind, eine SCP-Abfrage in ein oder aus einem strukturierten Abfragesprache-(structured query language - SQL)-Datenbankprotokoll zu übersetzen.

30. Netzelement nach Anspruch 28, wobei die DAC-Protokollübersetzungsmittel eingerichtet sind, eine SCP-Abfrage in ein oder aus einem ODBC-(open database connectivity)-Datenbankprokoll zu übersetzen.

31. Netzelement nach Anspruch 1, wobei die Paketunterscheidungsmittel ausgelegt sind zur Überprüfung einer Zielnetzadresse in dem empfangenen Datenpaket, durch Bestimmen, ob das Datenpaket für einen SCP-Knoten gedacht ist, der für den Empfang eines FEP-Dienstes bereitgestellt ist.

32. Netzelement nach Anspruch 31, wobei die Zielnetzadresse einen SS7-Zielpunktcode (destination point code - DPC) und ein Subsystem (SSN) umfasst.

33. Netzelement nach Anspruch 32, wobei der SS7-DCP derselbe ist wie ein dem Netzelement zugeordneter SS7-PC.

34. Netzelement nach Anspruch 32, wobei die SSN einer SSN entspricht, die für den FEP-Dienst vorgesehen ist.

35. Netzelement nach Anspruch 1, wobei die Paketunterscheidungsmittel angepasst sind zur Überprüfung eines Übersetzungstyp-(translation type - TT)-Wertes in dem empfangenen Datenpaket, durch Bestimmen, ob das Datenpaket für einen SCP-Knoten gedacht ist, der für den Empfang eines FEP-Dienstes bereitgestellt ist.

36. Netzelement nach Anspruch 1, wobei die Paketunterscheidungsmittel angepasst sind zur Überprüfung eines Subsystemnummern-(SSN)-Wertes in dem empfangenen Datenpaket, durch Bestimmen, ob das Datenpaket für einen SCP-Knoten gedacht ist, der für den Empfang eines FEP-Dienstes bereitgestellt ist.

37. Verfahren zur Bereitstellung eines Dienstesteuerungspunkt-(service control point - SCP)-Vorverarbeitungsdienstes sowie zum Routen eines Datenpakets in einem Kommunikationsnetz, das Verfahren umfassend:
Bereitstellen, durch ein Netzelement, eines FEP-Dienstes für eine Vielzahl von SCPs, die von dem Netzelement getrennt sind, und Beseitigen der Notwendigkeit von individuellen Vorverarbeitungsprozessoren an den SCPs, wobei die Bereitstellung des FEP-Dienstes umfasst:
(a) an dem Netzelement, das einen ersten SS7-Punktcode (PC) aufweist, Empfangen eines Datenpakets mit einem ersten SS7-Zielpunktcode (DPC) von einem Kommunikationsnetz;
(b) Bestimmen, ob das empfangene Datenpaket für einen SCP gedacht ist, der vorgesehen ist, einen Vorverarbeitungs-(front-end processing - FEP)-Dienst zu empfangen;
(c) als Antwort auf die Bestimmung, dass das empfangene Datenpaket für einen SCP gedacht ist, der für den Empfang eines FEP-Dienstes vorgesehen ist, Durchführen einer Suche in einer Datenbankzugriffssteuerungs-(database access control - DAC)-Datenbank unter Verwendung einer in dem empfangenen Datenpaket enthaltenen Schlüsselinformation;
(d) Modifizieren des empfangenen Datenpakets aufgrund einer Information, die von der DAC-Datenbanksuche zurückgesendet wird; und
(e) Übertragen des modifizierten Datenpakets an einen der SCPs.

38. Verfahren nach Anspruch 37, wobei die Schlüsselinformation einen Subsystemnummern-(SSN)-Wert umfasst.

39. Verfahren nach Anspruch 37, wobei das empfangene Datenpaket eine Zeichengabenachricht des Zeichengabesystems Nr. 7 (SS7) ist.

40. Verfahren nach Anspruch 39, wobei die SS7-Zeichengabenachricht eine Nachrichtenzeichengabeeinheit (message signaling unit - MSU) für ein Anwenderteil für Transaktionsabwicklung (transaction capabilities application part - TCAP) ist.

41. Verfahren nach Anspruch 40, wobei die TCAP-MSU eine SCP- oder Datenbankabfragenachricht enthält.

42. Verfahren nach Anspruch 37, wobei das Kommunikationsnetz ein SS7-Netz ist.

43. Verfahren nach Anspruch 37, wobei die Übertragung des modifizierten Datenpakets an einen der SCPs die Übertragung des modifizierten Datenpakets über ein Internetprotokoll-(IP)-Netz umfasst.

44. Verfahren nach Anspruch 37, wobei die Bestimmung, ob das empfangene Datenpaket für einen SCP bestimmt ist, der für den Empfang eines Vorverarbeitungs-(FEP)-Dienstes vorgesehen ist, die Überprüfung des DPC-Wertes in dem empfangenen Datenpaket umfasst.

45. Verfahren nach Anspruch 44, wobei die Bestimmung, ob das empfangene Datenpaket für einen SCP bestimmt ist, der für den Empfang eines Vorverarbeitungs-(FEP)-Dienstes vorgesehen ist, weiterhin die Überprüfung eines Zielsubsystem-(SSN)-Wertes in dem empfangenen Datenpaket umfasst.

46. Verfahren nach Anspruch 44, wobei der DPC derselbe ist wie der dem ersten Netzelement zugeordnete PC.

47. Verfahren nach Anspruch 45, wobei der Ziel-SSN-Wert einer SSN entspricht, die für den FEP-Dienst vorgesehen ist.

48. Verfahren nach Anspruch 37, wobei die Schlüsselinformation den ersten DPC und einen SSN-Wert enthält.

49. Verfahren nach Anspruch 37, wobei die Schlüsselinformation einen Übersetzungtyp-(TT)-Wert enthält.

50. Verfahren nach Anspruch 37, wobei das Modifizieren des empfangenen Datenpakets das Modifizieren einer Paket-Routing-Adresse in dem empfangenen Datenpaket umfasst.

51. Verfahren nach Anspruch 50, wobei das Modifizieren der Routing-Adresse das Modifizieren der Routing-Adresse aufgrund einer in der DAC-Datenbank enthaltenen SCP-Betriebsstatusinformation umfasst.

52. Verfahren nach Anspruch 50, wobei das Modifizieren der Routing-Adresse das Modifizieren der Routing-Adresse aufgrund einer in der DAC-Datenbank enthaltenen SCP-Überlastungsstatusinformation umfasst.

53. Verfahren nach Anspruch 50, wobei das Modifizieren der Routing-Adresse das Modifizieren der Routing-Adresse aufgrund einer in der DAC-Datenbank enthaltenen SCP-Eigentümerinformation umfasst.

54. Verfahren nach Anspruch 50, wobei das Modifizieren der Routing-Adresse das Modifizieren der Routing-Adresse derart umfasst, dass eine Ziel-IP-Netzadresse enthalten ist.

55. Verfahren nach Anspruch 37, wobei das Modifizieren des empfangenen Datenpakets die Änderung eines Protokolls einer in dem empfangenen Paket enthaltenen Datenbankabfrageanweisung umfasst.

56. Verfahren nach Anspruch 55, wobei die Änderung eines Protokolls die Änderung des Protokolls aufgrund einer in der DAC-Datenbank enthaltenen SCP-Protokollinformation umfasst.

57. Netzelement nach Anspruch 1, wobei die Bereitstellung des FEP-Dienstes für eine Vielzahl von SCP- oder Datenbankknoten die Bereitstellung eines Vorverarbeitungsdienstes an einem Signaltransferpunkt (STP) umfasst.

58. Verfahren nach Anspruch 37, wobei die Bereitstellung des FEP-Dienstes vom ersten Netzelement die Bereitstellung eines Vorverarbeitungsdienstes von einem Signaltransferpunkt (STP) umfasst.

## Revendications

1. Elément de réseau destiné à fournir un service de traitement frontal (FEP) d'un point de commande de service (SCP) et à acheminer des paquets de données à travers un réseau de communication, l'élément de réseau comprenant :
(a) un module de communication capable de transmettre des paquets de données à destination et de recevoir des paquets de données en provenance d'un réseau de communication;
(b) des moyens de discrimination de paquet pour déterminer si un paquet de données reçu à partir du réseau de communication est prévu pour un noeud SCP qui est conçu pour recevoir un service de traitement frontal (FEP) ;
(c) une base de données de commande d'accès de base de données (DAC) contenant des informations concernant des noeuds SCP qui sont conçus pour recevoir un service FEP ; et
(d) des moyens de DAC pour interroger la base de données DAC et modifier le paquet reçu pour qu'il comprenne des informations renvoyées par la base de données DAC, dans lequel l'élément de réseau est adapté pour fournir un service FEP pour une pluralité de noeuds SCP séparés de l'élément de réseau et éliminer la nécessité pour les noeuds SCP ou de base de données de disposer de processeurs frontaux individuels.

2. Elément de réseau selon la revendication 1, dans lequel le paquet de données reçu est un message de signalisation du système de signalisation 7 (SS7).

3. Elément de réseau selon la revendication 2, dans lequel le message de signalisation SS7 est une unité de signalisation de message (MSU) d'une partie d'application des capacités de transaction (TCAP).

4. Elément de réseau selon la revendication 3, dans lequel la MSU TCAP comprend un message d'interrogation de base de données.

5. Elément de réseau selon la revendication 1, dans lequel le réseau de communication est un réseau SS7.

6. Elément de réseau selon la revendication 1, dans lequel le réseau de communication est un réseau de protocole internet (IP).

7. Elément de réseau selon la revendication 1, dans lequel le réseau de communication est un réseau en mode de transfert asynchrone (ATM).

8. Elément de réseau selon la revendication 1, dans lequel le module de communication est un module d'interface de liaison (LIM) du système de signalisation 7 (SS7).

9. Elément de réseau selon la revendication 1, dans lequel le module de communication est un module de communication de base de données (DCM) de protocole internet (IP).

10. Elément de réseau selon la revendication 1, dans lequel la base de données DAC comprend une pluralité d'enregistrements et chaque enregistrement de base de données DAC comprend une adresse de réseau IP associée à l'un des noeuds SCP.

11. Elément de réseau selon la revendication 1, dans lequel la base de données DAC comprend une pluralité d'enregistrements et chaque enregistrement, de base de données DAC comprend des informations d'état opérationnel associées à l'un des noeuds SCP.

12. Elément de réseau selon la revendication 1, dans lequel la base de données DAC comprend une pluralité d'enregistrements et chaque enregistrement de base de données DAC comprend des informations de propriété associées à l'un des noeuds SCP.

13. Elément de réseau selon la revendication 1, dans lequel la base de données DAC comprend une pluralité d'enregistrements et chaque enregistrement de base de données DAC comprend des informations de protocole de base de données associées à l'un des noeuds SCP.

14. Elément de réseau selon la revendication 1, dans lequel la base de données DAC comprend une pluralité d'enregistrements et chaque enregistrement de base de données DAC comprend des informations d'identification de type de service associées à l'un des noeuds SCP.

15. Elément de réseau selon la revendication 14, dans lequel les informations d'identification de type de service identifient un service de réseau intelligent évolué (AIN).

16. Elément de réseau selon la revendication 14, dans lequel les informations d'identification de type de service correspondent à une valeur de type de traduction (TT).

17. Elément de réseau selon la revendication 14, dans lequel les informations d'identification de type de service correspondent à un numéro de sous-système (SSN).

18. Elément de réseau selon la revendication 14, dans lequel les informations d'identification de type de service identifient un service de nom de demandeur (CNAM).

19. Elément de réseau selon la revendication 14, dans lequel les informations d'identification de type de service identifient un service de base de données d'informations de ligne (LIDB).

20. Elément de réseau selon la revendication 14, dans lequel les informations d'identification de type de service identifient un service de numéro gratuit (800).

21. Elément de réseau selon la revendication 14, dans lequel les informations d'identification de type de service identifient un service de conservation de numéro local (LNP).

22. Elément de réseau selon la revendication 14, dans lequel les informations d'identification de type de service identifient un service de présence.

23. Elément de réseau selon la revendication 8, dans lequel les moyens de discrimination de paquet résident sur le LIM.

24. Elément de réseau selon la revendication 1, dans lequel la base de données DAC est intégrée et contenue dans l'élément de réseau.

25. Elément, de réseau selon la revendication 1, dans lequel la base de données DAC est située sur un serveur de base de données externe couplé en communication avec l'élément de réseau.

26. Elément de réseau selon la revendication 1, dans lequel les données qui constituent la base de données DAC sont maintenues dans une mémoire vive rapide.

27. Elément de réseau selon la revendication 1, dans lequel les données qui constituent la base de données DAC sont maintenues sur des supports de stockage à disque optique rapides.

28. Elément de réseau selon la revendication 1, comprenant des moyens de traduction de protocole DAC pour modifier le paquet de données reçu pour qu'il comprenne des informations de protocole de base de données prédéterminées.

29. Elément de réseau selon la revendication 28, dans lequel les moyens de traduction de protocole DAC sont capables de traduire une interrogation SCP à destination ou en provenance d'un protocole de base de données d'un langage structuré d'interrogation (SQL).

30. Elément de réseau selon la revendication 28, dans lequel les moyens de traduction de protocole DAC sont capables de traduire une interrogation SCP à destination ou en provenance d'un protocole de base de données d'une connectivité ouverte de base de données (ODBC).

31. Elément de réseau selon la revendication 1, dans lequel les moyens de discrimination de paquet sont adaptés pour examiner une adresse de réseau de destination dans le paquet de données reçu en déterminant si le paquet de données est destiné à un noeud SCP qui est conçu pour recevoir un service FEP.

32. Elément de réseau selon la revendication 31, dans lequel l'adresse de réseau de destination comprend un code de point de destination (DPC) SS7 et un sous-système (SSN).

33. Elément de réseau selon la revendication 32, dans lequel le DPC SS7 est le même qu'un PC SS7 attribué à l'élément de réseau.

34. Elément de réseau selon la revendication 32, dans lequel le SSN correspond à un SSN qui est conçu pour un service FEP.

35. Elément, de réseau selon la revendication 1, dans lequel les moyens de discrimination de paquet sont adaptés pour examiner une valeur de type de traduction (TT) dans le paquet de données reçu en déterminant si le paquet de données est destiné à un noeud SCP qui est conçu pour recevoir un service FEP.

36. Elément de réseau selon la revendication 1, dans lequel les moyens de discrimination de paquet sont adaptés pour examiner une valeur de numéro de sous-système (SSN) dans le paquet de données reçu en déterminant si le paquet de données est destiné à un noeud SCP qui est conçu pour recevoir un service FEP.

37. Procédé destiné à fournir un service de traitement frontal d'un point de commande de service (SCP) et à acheminer un paquet de données dans un réseau de communication, le procédé comprenant :
la fourniture, à partir d'un élément de réseau, d'un service FEP pour une pluralité de SCP séparés de l'élément de réseau et éliminer la nécessité de processeurs frontaux individuels au niveau des SCP, dans lequel la fourniture d'un service FEP comprend les étapes consistant à :
(a) à l'élément de réseau présentant un premier code de point (PC) SS7, recevoir un paquet de données présentant un premier code de point de destination (DPC) SS7 à partir d'un réseau de communication ;
(b) déterminer si le paquet de données reçu est destiné à un SCP qui est conçu pour recevoir un service de traitement frontal (FEP) ;
(c) en réponse à la détermination que le paquet de données reçu est destiné à un SCP qui est conçu pour recevoir un service FEP, effectuer une consultation dans une base de données de commande d'accès de base de données (DAC) en utilisant des informations clé contenues dans le paquet de données reçu ;
(d) modifier le paquet de données reçu sur la base d'informations renvoyées par la consultation de base de données DAC ; et
(e) transmettre le paquet de données modifié à l'un des SCP.

38. Procédé selon la revendication 37, dans lequel les informations clé comprennent une valeur de numéro de sous-système (SSN).

39. Procédé selon la revendication 37, dans lequel le paquet de données reçu est un message de signalisation du système de signalisation 7 (SS7).

40. Procédé selon la revendication 39, dans lequel le message de signalisation SS7 est une unité de signalisation de message (MSU) d'une partie d'application de capacités de transaction (TCAP).

41. Procédé selon la revendication 40, dans lequel la MSU TCAP comprend un message d'interrogation de SCP ou de base de données.

42. Procédé selon la revendication 37, dans lequel le réseau de communication est un réseau. SS7.

43. Procédé selon la revendication 37, dans lequel la transmission du paquet de données modifié à l'un des SCP comprend la transmission du paquet de données modifié sur un réseau de protocole internet (IP).

44. Procédé selon la revendication 37, dans lequel la détermination si le paquet de données reçu est destiné à un SCP qui est conçu pour recevoir un service de traitement frontal (FEP) comprend l'examen de la valeur DPC dans le paquet de données reçu.

45. Procédé selon la revendication 44, dans lequel la détermination si le paquet de données reçu est destiné à un SCP qui est conçu pour recevoir un service de traitement frontal (FEP) comprend en outre l'examen d'une valeur de sous-système de destination (SSN) dans le paquet de données reçu.

46. Procédé selon la revendication 44, dans lequel le DPC est le même que le PC attribué au premier élément de réseau.

47. Procédé selon la revendication 45, dans lequel la valeur SSN de destination correspond à un SSN qui est conçu pour un service FEP.

48. Procédé selon la revendication 37, dans lequel les informations clé comprennent le premier DPC et une valeur SSN.

49. Procédé selon la revendication 37, dans lequel les informations clé comprennent une valeur de type de traduction (TT).

50. Procédé selon la revendication 37, dans lequel la modification du paquet de données reçu comprend la modification d'une étiquette d'acheminement de paquet dans le paquet de données reçu.

51. Procédé selon la revendication 50, dans lequel la modification de l'étiquette d'acheminement comprend la modification de l'étiquette d'acheminement sur la base d'informations d'état opérationnel SCP contenues dans la base de données DAC.

52. Procédé selon la revendication 50, dans lequel la modification de l'étiquette d'acheminement comprend la modification de l'étiquette d'acheminement sur la base d'informations d'état d'encombrement SCP contenues dans la base de données DAC.

53. Procédé selon la revendication 50, dans lequel la modification de l'étiquette d'acheminement comprend la modification de l'étiquette d'acheminement sur la base d'informations de propriété SCP contenues dans la base de données DAC.

54. Procédé selon la revendication 50, dans lequel la modification de l'étiquette d'acheminement comprend la modification de l'étiquette d'acheminement pour qu'elle comprenne une adresse de réseau IP de destination.

55. Procédé selon la revendication 37, dans lequel la modification du paquet de données reçu comprend le changement d'un protocole d'une instruction d'interrogation de base de données contenue dans le paquet reçu.

56. Procédé selon la revendication 55, dans lequel le changement d'un protocole comprend le changement du protocole sur la base d'informations de protocole SCP contenues dans la base de données DAC.

57. Elément de réseau selon la revendication 1, dans lequel la fourniture d'un service FEP pour une pluralité de noeuds SCP ou de base de données comprend la fourniture d'un service de traitement frontal au niveau d'un point de transfert de signal (STP).

58. Procédé selon la revendication 37, dans lequel la fourniture d'un service FEP à partir du premier élément de réseau comprend la fourniture d'un service de traitement frontal à partir d'un point de transfert de signal (STP).
